# EUROPÄISCHE PATENTSCHRIFT

(11) **EP 1 656 322 B1**
(45) Veröffentlichungstag und Bekanntmachung des Hinweises auf die Patenterteilung: **05.09.2007**
(21) Anmeldenummer: 04763900.0
(22) Anmeldetag: 06.08.2004
(51) Int. Cl.: C01B 7/04

(54) **VERFAHREN ZUR HERSTELLUNG VON CHLOR**
METHOD FOR THE PRODUCTION OF CHLORINE
PROCEDE DE PRODUCTION DE CHLORE

(30) Priorität: 08.08.2003 DE 10336522
(43) Veröffentlichungstag der Anmeldung: 17.05.2006
(73) Patentinhaber: BASF Aktiengesellschaft, 67056 Ludwigshafen (DE)
(72) Erfinder: WALSDORFF, Christian, 67059 Ludwigshafen (DE); FIENE, Martin, 67150 Niederkirchen (DE); SESING, Martin, 67165 Waldsee (DE); METELKINA, Olga, 67063 Ludwigshafen (DE); SEIDEMANN, Lothar, 68169 Mannheim (DE); STROEFER, Eckhard, 68163 Mannheim (DE); HARTH, Klaus, 67317 Altleiningen (DE)
(74) Vertreter: Isenbruck, Günter
(86) Internationale Anmeldenummer: PCT/EP2004/008872
(87) Internationale Veröffentlichungsnummer: WO 2005/014470

(56) Entgegenhaltungen:
- EP-A- 1 170 250
- DE-A- 4 004 454
- US-A- 5 908 607

## Beschreibung

Die Erfindung betrifft ein Verfahren zur Herstellung von Chlor.

In dem von Deacon 1868 entwickelten Verfahren der katalytischen Chlorwasserstoff-Oxidation wird Chlorwasserstoff mit Sauerstoff in einer exothermen Gleichgewichtsreaktion zu Chlor oxidiert. Durch Überführung von Chlorwasserstoff in Chlor kann die Chlorherstellung von der Natronlaugeherstellung durch Chloralkalielektrolyse entkoppelt werden. Eine solche Entkoppelung ist attraktiv, da weltweit der Chlorbedarf stärker als die Nachfrage nach Natronlauge wächst. Zudem fällt Chlorwasserstoff in großen Mengen beispielsweise bei Phosgenierungsreaktionen, etwa bei der Isocyanatherstellung, als Koppelprodukt an. Der bei der Isocyanatherstellung gebildete Chlorwasserstoff wird überwiegend in der Oxichlorierung von Ethylen zu 1,2-Dichtorethan eingesetzt, das zu Vinylchlorid und schließlich zu PVC weiterverarbeitet wird. Durch den Deacon-Prozess wird somit auch eine Entkoppelung von Isocyanat-Herstellung und Vinylchlorid-Herstellung ermöglicht.

In der EP-B 0 233 773 wird die katalytische Chlorwasserstoff-Oxidation an pulverförmigen Chromoxid-Katalysatoren in einem Wirbelbettverfahren beschrieben.

Wirbelbettverfahren zeichnen sich durch die Möglichkeit einer sehr isothermen Temperaturführung aus. Dabei kann die Bildung lokaler Überhitzungen des Katalysatorbetts, die Ausbildung sogenannter "hot spots", weitgehend vermieden werden. Wirbelbettverfahren weisen jedoch Nachteile auf. Dazu zählen die Schwierigkeiten beim Up-Scaling, ein zum Teil erheblicher Austrag von Katalysatormaterial mit den Reaktionsgasen während des Betriebs der Wirbelbettreaktoren, sowie die Gefahr einer durch Verkleben von Katalysatorteilchen bedingte Instabilität des Wirbelbetts. Die Gefahr des Verklebens von Katalysatorteilchen ("Sticking") ist bei niedrigen Betriebstemperaturen besonders groß.

Festbettverfahren weisen die genannten Nachteile nicht auf. Dazu werden in der Regel Hordenreaktoren mit Zwischenkühlung oder Rohrbündelreaktoren eingesetzt. EP-A 0 936 184 beschreibt die Durchführung der Deacon-Reaktion an einem festen Katalysatorbett unter Verwendung von Rutheniumkatalysatoren. Bei der Durchführung exothermer Umsetzungen an einem Katalysator-Festbett kommt es jedoch in der Regel zur Ausbildung von "hot spots". Diese beeinträchtigen die Lebensdauer des Katalysators und sind deshalb nach Möglichkeit zu vermeiden. Obwohl eine Reihe von Maßnahmen bekannt ist, die Gefahr der Ausbildung von "hot spots" zu vermindern, beispielsweise das Arbeiten mit durch Inertmaterial verdünnten Katalysatorschüttungen und/oder das Arbeiten mit strukturierten Katalysatorschüttungen, deren katalytische Aktivität (durch unterschiedliche lmprägnierung der Katalysatorträger mit Aktivkomponenten oder unterschiedliche Verdünnung der Schüttung) in Strömungsrichtung sukzessive zunimmt, lässt sich die Ausbildung von "hot spots" bisher noch nicht gänzlich unterdrücken. Auch werden durch die Verdünnung der Katalysatorschüttung die möglichen Raum/Zeit-Ausbeuten des Verfahrens verringert.

Aufgabe der Erfindung ist es, ein verbessertes Verfahren zur Herstellung von Chlor aus Chlorwasserstoff bereitzustellen, das den Nachteilen des Standes der Technik abhilft.

Gelöst wird die Aufgabe durch ein Verfahren zur Herstellung von Chlor durch katalytische Gasphasen-Oxidation von Chlorwasserstoff mit den Schritten:
a) ein Einspeisungsgastrom l enthaltend Chlorwasserstoff und ein Einspeisungsgasstrom ll enthaltend Sauerstoff werden bereitgestellt;
b) in einer ersten Oxidationsstufe werden der Einspeisungsgastrom l, der Einspeisungsgasstrom ll, gegebenenfalls ein Chlorwasserstoff enthaltender Rückstrom la und gegebenenfalls ein Sauerstoff enthaltender Rückstrom lla, in eine erste Oxidationszone eingespeist und mit einem ersten Oxidationskatalysator in Kontakt gebracht, wobei eine erste Teilmenge des Chlorwasserstoffs zu Chlor oxidiert und ein Gasstrom lll erhalten wird, der Chlor, nicht umgesetzten Sauerstoff, nicht umgesetzten Chlorwasserstoff und Wasserdampf enthält;
c) in einer zweiten Oxidationsstufe wird der Gasstrom III in eine zweite Oxidationszone eingespeist und mit mindestens einem weiteren Oxidationskatalysator in Kontakt gebracht, wobei eine zweite Teilmenge des Chlorwasserstoffs zu Chlor oxidiert und ein Produktgasstrom IV erhalten wird, der Chlor, nicht umgesetzten Sauerstoff, nicht umgesetzten Chlorwasserstoff und Wasserdampf enthält;
d) aus dem Produktgasstrom lV werden Chlor, gegebenenfalls der Rückstrom la und gegebenenfalls der Rückstrom lla gewonnen,
dadurch gekennzeichnet, dass der erste Oxidationskatalysator in der ersten Oxidationszone als Wirbelschicht und der oder die weiteren Oxidationskatalysatoren in der zweiten Oxidationszone in einer Festbett-Schüttung vorliegen.

Es wird also ein mindestens zweistufiges Verfahren bereitgestellt, bei dem ein erster Chlorwasserstoff-Teilumsatz in einer Wirbelbettreaktor-Stufe und ein zweiter Chlorwasserstoff-Teilumsatz in einer oder mehreren Festbettreaktor-Stufen erzielt wird.

Da es sich bei der Deacon-Reaktion um eine exotherme Gleichgewichtsreaktion handelt, ist es unter thermodynamischen Gesichtspunkten vorteilhaft, bei möglichst niedrigen Temperaturen zu arbeiten, bei denen der Katalysator aber noch eine ausreichende Aktivität aufweist, um einen möglichst hohen Umsatz zu erzielen. Niedrige Temperaturen sind aber in der Regel auch mit niedrigen Raum-Zeit-Ausbeuten verbunden. Hohe Raum-Zeit-Ausbeuten bedingen wegen der hohen Wärmeentwicklung in der Regel auch hohe Temperaturen.

Die Umsetzung der ersten Chlorwasserstoff-Teilmenge in der Wirbelbettreaktor-Stufe b) kann bei hohen Temperaturen und hohen Raum-Zeit-Ausbeuten erfolgen, da die Gefahr der Ausbildung von "hot-spots" in einem Wirbelbett nicht gegeben ist. Die hohen Temperaturen in der Wirbelbett-Stufe beeinträchtigen auch nicht den maximal mit dem erfindungsgemäßen Verfahren zu erzielenden Gesamtumsatz, da die thermodynamisch erzielbaren Umsätze erst in der zweiten Oxidationsstufe c), also der oder den Festbettreaktor-Stufen angestrebt werden. Diese kann aber bei deutlich niedrigeren Temperaturen betrieben werden, um den stark auf der Produktseite liegenden optimalen thermodynamischen Gleichgewichtszustand zu erreichen, ohne dass insgesamt zu große Einbußen bei der Raum/Zeit-Ausbeute hingenommen werden müssen, da der Großteil des Umsatzes bereits in der Wirbelschicht erzielt wird. Da in der Wirbelbett-Stufe b) bereits ein Teilumsatz erfolgt und der resultierende Gasstrom lll mit Produktgasen verdünnt ist, besteht in der Festbettreaktor-Stufe c) nur noch eine geringe Gefahr der Ausbildung von hot-spots, welche durch weitere Maßnahmen, beispielsweise dem Arbeiten mit einer strukturierten Katalysatorschüttung, weiter vermindert werden kann. Da die Wirbelbettreaktor-Stufe bei höheren Temperaturen durchgeführt werden kann, wird außerdem die Gefahr des Zusammenklebens der Katalysatorpartikel im Wirbelbett (auch als "Katalysator-Sticking" bezeichnet) verringert.

ln einer ersten Verfahrensstufe a) wird ein Einspeisungsgasstrom l enthaltend Chlorwasserstoff bereitgestellt. Chlorwasserstoff fällt beispielsweise bei der Herstellung aromatischer Polyisocyanate wie Toluylendiisocyanat (TDI) und Diphenylmethandiisocyanat (MDl) aus den entsprechenden Polyaminen und Phosgen, bei der Herstellung von Säurechloriden, bei der Chlorierung von Aromaten, bei der Herstellung von Vinylchlorid sowie bei der Herstellung von Polycarbonaten an. Dieser Chlorwasserstoff kann Kohlenwasserstoffe oder Chlorkohlenwasserstoffe als Verunreinigungen, beispielsweise in Mengen von 100 bis 3000 ppm, enthalten. Daneben können weitere Gasbestandteile enthalten sein wie Kohlenmonoxid, Kohlendioxid, Stickstoff sowie weitere Inertgase, typischer Weise in Mengen von 0 bis 1 Vol.-%.

Die Verunreinigungen können beispielsweise durch katalytische Verbrennung der Kohlenwasserstoffe und Chlorkohlenwasserstoffe in dem Einsatzgasstrom oder durch Absorption der Kohlenwasserstoffe und Chlorkohlenwasserstoffe an einem geeigneten Absorptionsmittel aus dem Einsatzgasstrom entfernt werden. Die Kohlenwasserstoffe oder Chlorkohlenwasserstoffe können auch durch Verbrennung in den Oxidationsstufen umgesetzt werden. Dabei besteht grundsätzlich, insbesondere bei Anwesenheit von Chlorkohlenwasserstoffen wie Monochlorbenzol, die Gefahr der Bildung von Dioxinen. Zu deren Vermeidung ist in der Regel eine genaue Kontrolle der Reaktionstemperatur erforderlich, wie sie für das erfindungsgemäße Verfahren kennzeichnend ist.

Chlorwasserstoff wird bevorzugt gasförmig eingespeist. Gegebenenfalls kann es vorteilhaft sein, eine Teilmenge des Chlorwasserstoffs als flüssige Salzsäure einzuspeisen, um die Verdampfungsenthalpie der Salzsäure zu nutzen und damit Wärmetauscherfläche des Reaktors zu sparen.

Ferner wird ein Einspeisungsgasstrom ll enthaltend Sauerstoff bereitgestellt. Der Einspeisungsgasstrom ll kann aus reinem Sauerstoff, technischem Sauerstoff, beispielsweise 94 vol.-%igen oder 98 vol.-%igen technischem Sauerstoff, Luft oder anderen Sauerstoff/Inertgas-Gemischen bestehen. Luft ist wegen des hohen lnertgasanteils, reiner Sauerstoff aus Kostengründen weniger bevorzugt.

In einer ersten Oxidationsstufe b) werden der Einspeisungsgastrom 1, der Einspeisungsgasstrom II, gegebenenfalls ein Chlorwasserstoff enthaltender Rückstrom Ia und gegebenenfalls ein Sauerstoff enthaltender Rückstrom IIa in eine erste Oxidationszone eingespeist und mit einem ersten Oxidationskatalysator in Kontakt gebracht, wobei der erste Oxidationskatalysator in der ersten Oxidationszone als Wirbelschicht vorliegt.

Es ist zweckmäßig, Sauerstoff in überstöchiometrischen Mengen einzusetzen. Üblich ist beispielsweise HCl : O₂ -Verhältnis von 4 : 1,5 bis 1 : 1. Da keine Selektivitätsverluste zu befürchten sind, kann es wirtschaftlich vorteilhaft sein, bei relativ hohen Drücken und dementsprechend bei gegenüber Normaldruck längeren Verweilzeiten zu arbeiten. Höhere Drücke führen wegen den damit einhergehenden geringeren Strömungsgeschwindigkeiten zu einer erhöhten Gefahr von hot spots in einem reinen Festbett-Verfahren, was durch das erfindungsgemäße Verfahren umgangen wird.

Die erste Verfahrensstufe wird in einem Wirbelschichtreaktor durchgeführt. Der Wirbelschichtreaktor kann eine konische oder bevorzugt zylindrische Form aufweisen.

Das aus den Einspeisungsgasströmen gebildete Wirbelgas wird am unteren Ende über einen Verteiler- oder Düsenboden eingeleitet.

In dem Wirbelschichtreaktor können Wärmetauscher eingebaut sein. Diese können beispielsweise als Rohrbündel-, Haarnadel-, Spiral- oder Plattenwärmetauscher ausgeführt sein. Die Wärmetauscher können horizontal, vertikal oder im Winkel angeordnet sein.

Die Entmischungszone (Katalysatorpartikel/Gas) oberhalb des Wirbelbetts im Wirbelschichtreaktor, der sogenannte Freeboard, ist vorzugsweise zylindrisch ausgebildet. Da sich mit zunehmendem Querschnitt der Feststoffaustrag verringert kann es auch wirtschaftlich sein, den Freeboard-Querschnitt gegenüber dem Wirbelbett-Durchmesser zu erweitern.

Der Durchmesser des Wirbelbetts beträgt im Allgemeinen 0,1 bis 10 m. Die Freeboard-Höhe beträgt im Allgemeinen 20 bis 500 %, vorzugsweise 50 bis 250 % der Höhe des Wirbelbetts. Die Leerrohrgasgeschwindigkeit im Wirbelbett beträgt im Allgemeinen 0,05 bis 20 m/s, vorzugsweise 0,1 bis 1,0 m/s. Die Leerrohrgasgeschwindigkeit im Freeboard beträgt im Allgemeinen 0,01 bis 2 m/s, vorzugsweise 0,05 bis 0,5 m/s. Der Druck im Wirbelbettreaktor beträgt im allgemeinen 1 bis 15 bar. Die Temperatur im Wirbelbett beträgt im Allgemeinen 250 bis 450 °C, vorzugsweise 280 bis 360 °C. Die Verweilzeit des aus den Einspeisungsgasströmen gebildeten Wirbelgases in der Wirbelschicht beträgt im Allgemeinen 1 bis 300 s, vorzugsweise 1 bis 30 s.

Für die erste Oxidationsstufe geeignete Oxidationskatalysatoren können Rutheniumoxid, Rutheniumchlorid oder andere Rutheniumverbindungen auf Siliziumdioxid, Aluminiumoxid, Titandioxid oder Zirkondioxid als Träger enthalten. Geeignete Katalysatoren können beispielsweise durch Aufbringen von Rutheniumchlorid auf den Träger und anschließendes Trocknen oder Trocknen und Calcinieren erhalten werden. Geeignete Katalysatoren können ergänzend zu oder an Stelle einer Rutheniumverbindung auch Verbindungen anderer Edelmetalle, beispielsweise Gold, Palladium, Platin, Osmium, Iridium, Silber, Kupfer oder Rhenium enthalten. Geeignete Katalysatoren können ferner Chrom(III)oxid enthalten.

Die Schüttdichte des Trägers des die Wirbelschicht bildenden ersten Oxidationskatalysators beträgt 0,1 bis 10 kg/l, vorzugsweise 0,5 bis 2 kg/l. Das Porenvolumen des Katalysators beträgt 0,01 bis 2 ml/g, vorzugsweise 0,2 bis 1,0 ml/g, der mittlere Partikeldurchmesser 1 bis 1000 µm, vorzugsweise 10 bis 200 µm.

Es wird ein Gasstrom lll erhalten, der Chlor, nicht umgesetzten Sauerstoff, nicht umgesetzten Chlorwasserstoff und Wasserdampf enthält. In einer Feststoffabscheidung werden aus der Wirbelschicht stammende, von dem Gasstrom III mitgerissene Partikel des ersten Oxidationskatalysators von dem Gasstrom III abgetrennt. Die Feststoffabscheidung kann in einem Zyklon oder mittels eines Feststofffilters erfolgen.

Erfolgt die Katalysatorabscheidung in einem Zyklon, so beträgt die Trennkomgröße, also die minimale Größe der durch den Zyklon zurückgehaltenen Katalysatorpartikel im Allgemeinen 0,1 bis 100 µm, vorzugsweise 1 bis 10 µm. Erfolgt die Katalysatorabscheidung mittels eines Feststofffilters, so beträgt die Abscheidekorngröße, also die minimale Größe der durch den Filter zurückgehaltenen Feststoffpartikel im Allgemeinen 0,01 bis 100 µm, vorzugsweise 0,01 bis 10 µm. Der Feststofffilter kann mit oder ohne Filterreinigung betrieben werden. Es ist auch möglich, Zyklon und Feststofffilter in Reihe zu schalten. Zusätzlich kann zur Absicherung gegen Feststoffaustrag bei Ausfall oder Schaden am Zyklon bzw. an den Filterkerzen ein zusätzlicher so genannter Polizeifilter hinter den Hauptfilter eingebaut werden.

Der Chlorwasserstoff-Umsatz in der ersten Oxidationsstufe b) beträgt im Allgemeinen 40 bis 80 %.

In einer zweiten Oxidationsstufe c) wird der Gasstrom III in eine zweite Oxidationszone eingespeist und mit mindestens einem weiteren Oxidationskatalysator in Kontakt gebracht, wobei eine zweite Teilmenge des Chlorwasserstoffs zu Chlor oxidiert wird. Der oder die weiteren Oxidationskatalysatoren liegen in einer Festbett-Schüttung vor.

Geeignete weitere Oxidationskatalysatoren können Rutheniumoxid, Rutheniumchlorid oder andere Rutheniumverbindungen auf Siliziumdioxid, Aluminiumoxid, Titandioxid oder Zirkondioxid als Träger enthalten. Geeignete Katalysatoren können beispielsweise durch Aufbringen von Rutheniumchlorid auf den Träger und anschließendes Trocknen oder Trocknen und Calcinieren erhalten werden. Geeignete Katalysatoren können ergänzend zu oder an Stelle einer Rutheniumverbindung auch Verbindungen anderer Edelmetalle, beispielsweise Gold, Palladium, Platin, Osmium, Iridium, Silber, Kupfer oder Rhenium enthalten. Geeignete Katalysatoren können ferner Chrom(III)oxid enthalten.

Die zweite Oxidationszone kann einen oder mehrere Festbettreaktoren umfassen. In einer bevorzugten Ausführungsform der Erfindung umfasst die zweite Oxidationszone genau einen Festbettreaktor. Dieser kann mit einer strukturierten Katalysatorschüttung (siehe unten) betrieben werden.

Der Verfahrensschritt c) kann adiabat oder bevorzugt isotherm oder annähernd isotherm, bevorzugt in Rohrbündelreaktoren an Heterogenkatalysatoren bei Reaktortemperaturen von 180 bis 400°C, bevorzugt 200 bis 350°C, besonders bevorzugt 220 bis 320°C und einem Druck von 1 bis 25 bar, bevorzugt 1,2 bis 20 bar, besonders bevorzugt 1,5 bis 17 bar und insbesondere 2,0 bis 15 bar durchgeführt werden.

Eine Ausführungsform besteht darin, dass man in der zweiten Oxidationszone eine strukturierte Katalysatorschüttung einsetzt, in der die katalytische Aktivität in Strömungsrichtung ansteigt. Eine derartige Festbett-Schüttung weist zwei oder mehr Zonen unterschiedlicher Aktivität auf. Eine Strukturierung der Katalysatorschüttung kann durch Verwendung von Katalysatoren unterschiedlicher Aktivität, die durch unterschiedliche Tränkung der Katalysatorträger mit Aktivmasse erhalten werden, oder durch unterschiedliche Verdünnung des Katalysators mit einem Inertmaterial erfolgen. Als Inertmaterial können beispielsweise Ringe, Zylinder oder Kugeln aus Titandioxid, Zirkondioxid oder deren Gemischen, Aluminiumoxid, Steatit, Keramik, Glas, Graphit oder Edelstahl eingesetzt werden. Das Inertmaterial hat bevorzugt eine ähnliche äußere Form wie die Katalysatorformkörper.

In einer Ausführungsform der Erfindung umfasst die Festbett-Schüttung der zweiten Oxidationszone zwei oder mehr weitere Oxidationskatalysatoren, welche in unterschiedlichen Zonen der Festbett-Schüttung angeordnet sind, wobei die Aktivität der Oxidationskatalysatoren in Strömungsrichtung abnimmt.

ln einer weiteren Ausführungsform weist die zweite Oxidationszone zwei oder mehr Temperaturzonen auf.

Die zwei oder mehr Temperaturzonen können durch eine entsprechende Anzahl von zwei oder mehr unabhängigen Wärmetauscherkreisläufen unabhängig voneinander temperiert werden. Pro Festbettreaktor können mehrere Temperaturzonen vorliegen. In einer Ausführungsform der Erfindung umfasst die zweite Oxidationszone nur einen Festbettreaktor, der zwei oder mehr Temperaturzonen aufweist. Bevorzugt weist der Festbettreaktor nur eine Temperaturzone auf.

Als Katalysatorformkörper eignen sich beliebige Formen, bevorzugt sind Tabletten, Ringe, Zylinder, Sterne, Wagenräder oder Kugeln, besonders bevorzugt sind Ringe, Zylinder oder Sternstränge.

Als Heterogenkatalysatoren eignen sich insbesondere Rutheniumverbindungen oder Kupferverbindungen auf Trägermaterialen, die auch dotiert sein können, bevorzugt sind gegebenenfalls dotierte Rutheniumkatalysatoren. Als Trägermaterialen eignen sich beispielsweise Siliciumdioxid, Graphit, Titandioxid mit Rutil- oder Anatas-Struktur, Zirkondioxid, Aluminiumoxid oder deren Gemische, bevorzugt Titandioxid, Zirkondioxid, Aluminiumoxid oder deren Gemische, besonders bevorzugt γ- oder δ-Aluminiumoxid oder deren Gemische.

Die Kupfer- bzw. die Rutheniumträgerkatalysatoren können beispielsweise durch Tränkung des Trägermaterials mit wässrigen Lösungen von CuCl₂ bzw. RuCl₃ und gegebenenfalls von Promotoren zur Dotierung, bevorzugt in Form ihrer Chloride, erhalten werden. Die Formgebung des Katalysators kann nach oder bevorzugt vor der Tränkung des Trägermaterials erfolgen.

Zur Dotierung eignen sich als Promotoren Alkalimetalle wie Lithium, Natrium, Kalium, Rubidium und Cäsium, bevorzugt Lithium, Natrium und Kalium, besonders bevorzugt Kalium, Erdalkalimetalle wie Magnesium, Calcium, Strontium und Barium, bevorzugt Magnesium und Calcium, besonders bevorzugt Magnesium, Seltenerdmetalle wie Scandium, Yttrium, Lanthan, Cer, Praseodym und Neodym, bevorzugt Scandium, Yttrium, Lanthan und Cer, besonders bevorzugt Lanthan und Cer, oder deren Gemische.

Die Formkörper können beispielsweise bei Temperaturen von 100 bis 400 °C, beispielsweise unter einer Stickstoff-, Argon- oder Luftatmosphäre getrocknet und gegebenenfalls calciniert werden. Bevorzugt werden die Formkörper zunächst bei 100 bis 150 °C getrocknet und anschließend bei 300 bis 400 °C, bevorzugt in Luftatmosphäre, calciniert.

Der Chlorwasserstoff-Umsatzanteil in der zweiten Oxidationsstufe c), bezogen auf den Gesamtumsatz, beträgt im Allgemeinen 20 bis 60 %. Der Chlorwasserstoff-Umsatz in der ersten und der zweiten Oxidationsstufe beträgt kumuliert im Allgemeinen 70 bis 95 %. Nicht umgesetzter Chlorwasserstoff kann nach Abtrennung teilweise oder vollständig in die erste Oxidationszone zurückgeführt werden.

Es wird ein Produktgasstrom lV erhalten, der Chlor, nicht umgesetzten Sauerstoff, nicht umgesetzten Chlorwasserstoff und Wasserdampf enthält.

In einem Verfahrensteil d) wird aus dem Produktgasstrom IV Chlor gewonnen. Im Allgemeinen werden dabei die Schritte d1) bis d4) durchgeführt, wobei
d1) aus dem Produktgasstrom IV Chlorwasserstoff und Wasser abgetrennt werden, wobei ein Chlor und Sauerstoff enthaltender Gasstrom V erhalten wird;
d2) der Gasstrom V getrocknet wird;
d3) aus dem Gasstrom V ein Sauerstoff enthaltender Strom abgetrennt und gegebenenfalls zumindest teilweise als Sauerstoff enthaltender Rückstrom lla in die erste Oxidationszone zurückgeführt wird, wobei ein chlorhaltiger Produktstrom Vl verbleibt;
d4) gegebenenfalls der chlorhaltige Produktstrom Vl weiter aufgereinigt wird.

Die Abtrennung von nicht umgesetztem Chlorwasserstoff und Wasserdampf kann durch Auskondensieren von wässriger Salzsäure aus dem Produktgasstrom IV durch Abkühlung erfolgen. Bevorzugt wird Chlorwasserstoff in verdünnter Salzsäure oder Wasser absorbiert.

In einer Ausführungsform der Erfindung wird die Abtrennstufe d1) wie nachstehend beschrieben durchgeführt. Dabei wird der Produktgasstrom lV in einer Absorptionszone mit Wasser oder verdünnter Salzsäure der Konzentration c1 in Kontakt gebracht und Chlorwasserstoff darin absorbiert, wobei eine Salzsäure der Konzentration c2 und ein Gasstrom V, der Chlor und Sauerstoff enthält, erhalten wird.

Als Absorptionsmittel geeignet ist jede verdünnte Salzsäure, die nicht an Chlorwasserstoff gesättigt ist. Üblicher Weise wird ihre Konzentration c1 bis zu 25 Gew.-% Chlorwasserstoff, beispielsweise ca. 15 Gew.-% betragen. Die Absorptionstemperatur beträgt üblicherweise von 0 bis 150 °C, vorzugsweise von 30 bis 100 °C, der Absorptionsdruck beträgt üblicherweise von 0,5 bis 20 bar, vorzugsweise von 1 bis 15 bar.

Es wird ein Gasstrom V erhalten, der Chlor und Sauerstoff enthält oder im wesentlichen aus diesen Gasen besteht. Dieser enthält üblicherweise noch Spuren von Feuchtigkeit. Üblicherweise wird daher ein Trocknungsschritt d2) durchgeführt, in dem der Gasstrom V durch in Kontakt bringen mit geeigneten Trocknungsmitteln von Feuchtigkeitsspuren befreit wird. Geeignete Trocknungsmittel sind beispielsweise konzentrierte Schwefelsäure, Molsiebe oder hygroskopische Adsorbentien.

In einer weiteren Verfahrensstufe d3) wird aus dem Gasstrom V ein Sauerstoff enthaltender Strom abgetrennt, der zumindest teilweise als Sauerstoff enthaltender Rückstrom IIa in die Oxidationszone zurückgeführt werden kann. Die Sauerstoff-Abtrennung erfolgt vorzugsweise durch Destillation, üblicherweise bei einer Temperatur im Bereich von -20 bis +50 °C und einem Druck im Bereich von 1 bis 20 bar in einer Destillationskolonne mit 10 bis 100 theoretischen Böden. Der Sauerstoff enthaltende Rückstrom lla steht häufig unter einem hohen Druck.

Es verbleibt ein chlorhaltiger Produktstrom VI, der nachfolgend weiter aufgereinigt werden kann.

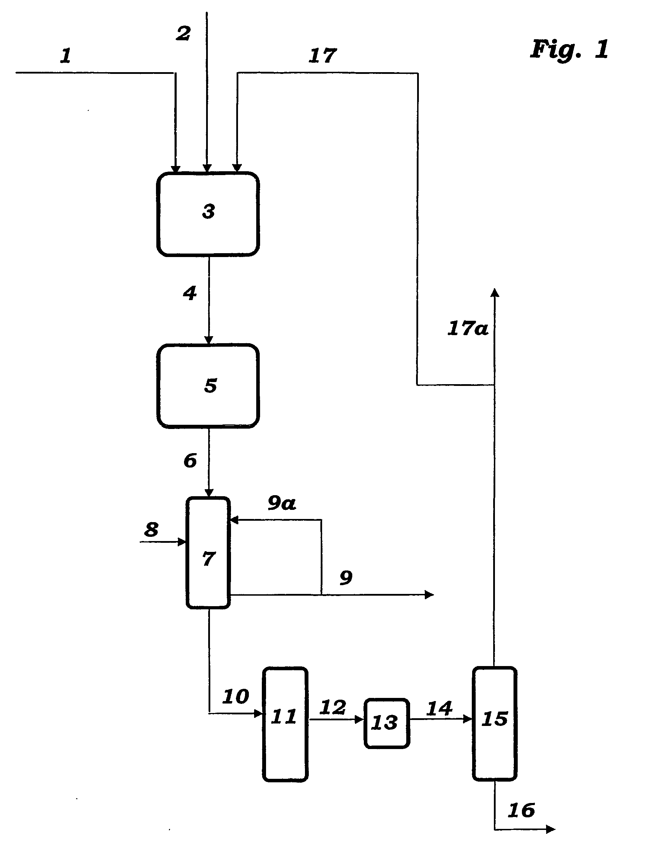

Die Erfindung wird nachfolgend anhand der Figur näher erläutert.

Die Figur zeigt das Verfahrensfließbild des erfindungsgemäßen Verfahrens gemäß einer Ausführungsform.

Ein Sauerstoff enthaltender Einspeisungsgasstrom 1, ein Chlorwasserstoff enthaltender Einspeisungsstrom 2 und ein Sauerstoff enthaltender Rückstrom 17, werden in den Wirbelschicht-Reaktor 3 eingespeist, in dem ein Teil des Chlorwasserstoffs zu Chlor oxidiert wird. Der erhaltene Strom 4 aus Sauerstoff, Chlor, nicht umgesetztem Chlorwasserstoff und Wasserdampf wird in den Rohrbündelreaktor 5 eingeleitet. Dieser enthält ein Katalysator-Festbett. Es wird ein Produktgasstrom 6 erhalten, der Chlor, nicht umgesetzten Sauerstoff, nicht umgesetzten Chlorwasserstoff und Wasserdampf enthält. Der Produktgasstrom 6 wird in einen Kühler/Kondensator 7 eingeleitet, der als Quenchkühler ausgebildet sein kann. In dem Kühler 7 wird Salzsäure 9 auskondensiert. Optional kann Wasser 8 als Quench- oder Absorptionsmittel in den Quenchkühler 7 eingespeist werden und kann ein Teilstrom 9a der verdünnten Salzsäure als Quenchmittel in den Quenchkühler zurückgeführt werden. Den Quenchkühler 7 verlässt ein im Wesentlichen von Chlorwasserstoff befreiter Gasstrom 10 aus Chlor und Sauerstoff, der noch Spuren von Wasserdampf enthält, und der einer Trocknungsstufe 11 zugeleitet wird. In der Trocknungsstufe 11 wird der Gasstrom 10 mit einem geeigneten Absorptionsmittel wie Schwefelsäure, Molsieben oder weiteren hygroskopischen Adsorbentien in Kontakt gebracht und so von Wasserspuren befreit. Die Trocknungsstufe 11 kann in einem Trockenturm oder mehren parallelen Trockentürmen, die alternierend regeneriert werden, durchgeführt werden. Der getrocknete Gasstrom 12 bzw. 14 (optional ist noch ein Kompressor 13 vorgesehen) aus Chlor und Sauerstoff wird dem Kondensator 15 zugeführt, in dem Sauerstoff abgetrennt und als Rückstrom 17 in den Chlorwasserstoff-Oxidationsreaktor zurückgeführt wird. Es wird ein Produktstrom 16 aus Chlor erhalten. Das flüssige Chlor-Rohprodukt wird vorzugsweise destillativ aufgereinigt. Um die Aufpegelung von inerten Gasbestandteilen zu vermeiden, ist ein Purge-Strom 17a vorgesehen.

## Patentansprüche

1. Verfahren zur Herstellung von Chlor durch katalytische Gasphasen-Oxidation von Chlorwasserstoff mit den Schritten:
a) ein Einspeisungsgastrom l enthaltend Chlorwasserstoff und ein Einspeisungsgasstrom ll enthaltend Sauerstoff werden bereitgestellt;
b) in einer ersten Oxidationsstufe werden der Einspeisungsgastrom l, der Einspeisungsgasstrom ll, gegebenenfalls ein Chlorwasserstoff enthaltender Rückstrom la und gegebenenfalls ein Sauerstoff enthaltender Rückstrom lla, in eine erste Oxidationszone eingespeist und mit einem ersten Oxidationskatalysator in Kontakt gebracht, wobei eine erste Teilmenge des Chlorwasserstoffs zu Chlor oxidiert und ein Gasstrom lll erhalten wird, der Chlor, nicht umgesetzten Sauerstoff, nicht umgesetzten Chlorwasserstoff und Wasserdampf enthält;
c) in einer zweiten Oxidationsstufe wird der Gasstrom lll in eine zweite Oxidationszone eingespeist und mit mindestens einem weiteren Oxidationskatalysator in Kontakt gebracht, wobei eine zweite Teilmenge des Chlorwasserstoffs zu Chlor oxidiert und ein Produktgasstrom lV erhalten wird, der Chlor, nicht umgesetzten Sauerstoff, nicht umgesetzten Chlorwasserstoff und Wasserdampf enthält;
d) aus dem Produktgasstrom lV werden Chlor, gegebenenfalls der Rückstrom la und gegebenenfalls der Rückstrom lla gewonnen;
**dadurch gekennzeichnet, dass** der erste Oxidationskatalysator in der ersten Oxidationszone in einer Wirbelschicht und der oder die weiteren Oxidationskatalysatoren in der zweiten Oxidationszone in einer Festbett-Schüttung vorliegen.

2. Verfahren nach Anspruch 1, **dadurch gekennzeichnet, dass** die Temperatur in der ersten Oxidationszone von 280 bis 360 °C und in der zweiten Oxidationszone von 220 bis 320 °C beträgt.

3. Verfahren nach Anspruch 1 oder 2, **dadurch gekennzeichnet, dass** die zweite Oxidationszone nur einen Festbett-Reaktor umfasst.

4. Verfahren nach einem der Ansprüche 1 bis 3, **dadurch gekennzeichnet, dass** die zweite Oxidationszone nur eine Temperaturzone aufweist.

5. Verfahren nach einem der Ansprüche 1 bis 4, **dadurch gekennzeichnet, dass** die Oxidationskatalysatoren Rutheniumoxid auf einem Träger, ausgewählt aus Siliziumdioxid, Aluminiumoxid, Titandioxid oder Zirkondioxid, enthalten.

6. Verfahren nach einem der Ansprüche 1 bis 5, wobei Schritt d) die Schritte umfasst:
d1) aus dem Produktgasstrom lV werden Chlorwasserstoff und Wasser abgetrennt, wobei ein Gasstrom V erhalten wird;
d2) der Gasstrom V wird getrocknet;
d3) aus dem Gasstrom V wird ein Sauerstoff enthaltender Strom abgetrennt und gegebenenfalls zumindest teilweise als Sauerstoff enthaltender Rückstrom IIa in die erste Oxidationszone zurückgeführt, wobei ein chlorhaltiger Produktstrom VI verbleibt;
d4) gegebenenfalls wird der chlorhaltige Produktstrom VI weiter aufgereinigt.

## Claims

1. A process for preparing chlorine by catalytic gas-phase oxidation of hydrogen chloride, which comprises the steps:
a) providing a feed gas stream I comprising hydrogen chloride and a feed gas stream II comprising oxygen;
b) in a first oxidation stage, feeding the feed gas stream I, the feed gas stream II, if appropriate a recycle stream Ia comprising hydrogen chloride and if appropriate an oxygen-comprising recycle stream IIa into a first oxidation zone and bringing them into contact with a first oxidation catalyst so that a first partial amount of the hydrogen chloride is oxidized to chlorine and a gas stream III comprising chlorine, unreacted oxygen, unreacted hydrogen chloride and water vapor is obtained;
c) in a second oxidation stage, feeding the gas stream III into a second oxidation zone and bringing it into contact with at least one further oxidation catalyst so that a second partial amount of the hydrogen chloride is oxidized to chlorine and a product gas stream IV comprising chlorine, unreacted oxygen, unreacted hydrogen chloride and water vapor is obtained;
d) isolating chlorine, if appropriate the recycle stream Ia and if appropriate the recycle stream IIa from the product gas stream IV,
wherein the first oxidization catalyst in the first oxidation zone is present in a fluidized bed and the further oxidation catalyst or catalysts in the second oxidation zone is/are present in a fixed bed.

2. The process according to claim 1, wherein the temperature in the first oxidation zone is from 280 to 360°C and that in the second oxidation zone is from 220 to 320°C.

3. The process according to claim 1 or 2, wherein the second oxidation zone comprises only one fixed-bed reactor.

4. The process according to any of claims 1 to 3, wherein the second oxidation zone has only one temperature zone.

5. The process according to any of claims 1 to 4, wherein the oxidation catalysts comprise ruthenium oxide on a support selected from among silicon dioxide, aluminum oxide, titanium dioxide and zirconium dioxide.

6. The process according to any of claims 1 to 5, wherein step d) comprises the steps:
d1) separating off hydrogen chloride and water from the product gas stream IV to give a gas stream V comprising chlorine and oxygen;
d2) drying the gas stream V;
d3) separating off an oxygen-comprising stream from the gas stream V and, if appropriate, recirculating at least part of it as oxygen-comprising recycle stream IIa to the first oxidation zone, leaving a chlorine-containing product stream VI;
d4) if appropriate, further purifying the chlorine-containing product stream VI.

## Revendications

1. Procédé de fabrication de chlore par oxydation catalytique en phase gazeuse de chlorure d'hydrogène, comprenant les étapes suivantes :
a) on prépare un courant de gaz d'alimentation I contenant du chlorure d'hydrogène et un courant de gaz d'alimentation II contenant de l'oxygène ;
b) dans une première étape d'oxydation, le courant de gaz d'alimentation I, le courant de gaz d'alimentation II, éventuellement un reflux Ia contenant du chlorure d'hydrogène et éventuellement un reflux IIa contenant de l'oxygène sont introduits dans une première zone d'oxydation et mis en contact avec un premier catalyseur d'oxydation, si bien qu'une première quantité partielle du chlorure d'hydrogène est oxydée en chlore et que l'on obtient un courant de gaz III contenant du chlore, de l'oxygène qui n'a pas réagi, du chlorure d'hydrogène qui n'a pas réagi et de la vapeur d'eau ;
c) dans une seconde étape d'oxydation, le courant de gaz III est introduit dans une seconde zone d'oxydation et mis en contact avec au moins un autre catalyseur d'oxydation, si bien qu'une seconde quantité partielle du chlorure d'hydrogène est oxydée en chlore et que l'on obtient un courant de produit gazeux IV contenant du chlore, de l'oxygène qui n'a pas réagi, du chlorure d'hydrogène qui n'a pas réagi et de la vapeur d'eau ;
d) à partir du courant de produit gazeux IV, on obtient du chlore, éventuellement le reflux Ia et éventuellement le reflux IIa ;
**caractérisé en ce que** le premier catalyseur d'oxydation de la première zone d'oxydation se présente en lit fluidisé et **en ce que** le ou les autres catalyseurs d'oxydation de la seconde zone d'oxydation se présentent sous la forme d'un garnissage en vrac en lit fixe.

2. Procédé selon la revendication 1, **caractérisé en ce que** la température dans la première zone d'oxydation se situe dans la plage de 280 à 360 °C et, dans la seconde zone d'oxydation, dans la plage de 220 à 320 °C.

3. Procédé selon la revendication 1 ou 2, **caractérisé en ce que** la seconde zone d'oxydation ne comprend qu'un réacteur à lit fixe.

4. Procédé selon l'une quelconque des revendications 1 à 3, **caractérisé en ce que** la seconde zone d'oxydation ne présente qu'une zone de température.

5. Procédé selon l'une quelconque des revendications 1 à 4, **caractérisé en ce que** les catalyseurs d'oxydation contiennent de l'oxyde de ruthénium sur un support, choisi parmi le dioxyde de silicium, l'oxyde d'aluminium, le dioxyde de titane ou le dioxyde de zirconium.

6. Procédé selon l'une quelconque des revendications 1 à 5, dans lequel l'étape d) comprend les phases suivantes :
d1) on sépare le chlorure d'hydrogène et l'eau du courant de produit gazeux IV, si bien que l'on obtient un courant gazeux V ;
d2) on sèche le courant gazeux V ;
d3) on sépare un courant contenant de l'oxygène du courant gazeux V et on le renvoie dans la première zone d'oxydation éventuellement au moins partiellement sous la forme de reflux contenant de l'oxygène IIa, si bien qu'il subsiste un courant de produit VI contenant du chlore ;
d4) on purifie éventuellement encore le courant de produit VI contenant du chlore.
